# EUROPEAN PATENT APPLICATION

(11) **EP 1 223 516 A2**
(43) Date of publication of application: **17.07.2002**
(21) Application number: 01000576.7
(22) Date of filing: 25.10.2001
(51) Int. Cl.: G06F 13/42, G06F 3/06

(54) **Apparatus and method for transferring compressed or high-precision data over an isochronous-signal interface**

(30) Priority: 31.10.2000 US 702335
(71) Applicant: Texas Instruments Incorporated, Dallas, Texas 75251 (US)
(72) Inventor: Hannah, Michael A., 75002, Allen (US); Magee, Steven R., 75006, Carrollton (US)
(74) Representative: Holt, Michael

(57) **Abstract**

Apparatus and method for transferring compressed or high-precision data over an isochronous-signal interface. A preferred embodiment enables the transfer of compressed data simultaneously with standard isochronous data, such as isochronous PCM data in an AC97 interface. Another preferred embodiment enables the transfer of high-precision isochronous data with a bit length longer than the bit length of standard precision isochronous data. For example, high-precision 24 bit data may be sent over an AC97 interface with a slot size of 20 bits.

## Description

### TECHNICAL FIELD OF THE INVENTION

The present invention relates generally to an apparatus and method for communicating with an isochronous-signal processor, and more particularly to an apparatus and method for transferring compressed or high precision data over an isochronous-signal interface.

### DESCRIPTION OF THE RELATED ART

Generally, in electrical communications, a coder/decoder ("codec") is used to perform conversion of data from one form to another. Typically, a codec is implemented as an integrated circuit ("IC") and is often used for analog-to-digital ("A/D") conversion and digital-to-analog ("D/A") conversion of data. A very common use for such a device is in a modem in which digital computer signals are converted to analog audio signals for transmission over a telephone line, and incoming analog audio telephone signals are converted to digital signals for processing by the computer.

One example of an audio codec implementation is described in the Audio Codec '97 specification revision 2.1 ("AC97"), developed by Intel Corporation. AC97, which is hereby incorporated herein by reference, defines a high quality audio architecture for analog and digital audio on the personal computer platform. Only certain aspects of AC97 relevant to the present invention are described herein, and other detailed information may be found by referring to the AC97 specification itself.

AC97 describes a two integrated circuit-type implementation, with one IC being a digital controller and the other IC being an analog signal processor slave. According to the specification, up to four analog slaves may be connected to a single digital controller. The digital controller may be implemented with a discrete component design, on a dedicated digital IC, on a microprocessor or digital signal processor ("DSP"), or a combination thereof. The analog processor may be implemented in a discrete component design, on a dedicated IC such as a codec, on a DSP, or a combination thereof. When the AC97 analog function is implemented on a DSP, the DSP receives/sends digital audio data from/to the AC97 controller. The DSP is responsible for converting the digital data into a form that can be used to generate an audio signal, and vice versa. The form is usually analog, although it may be digital also. The actual data conversion can be performed by the DSP directly or with the aid of another device, such as an audio codec. The digital audio data can be processed by the DSP between the AC97 interface and the audio codec. The functions generally may be implemented in hardware, software, or a combination of both.

The two devices, the AC97 digital controller and the AC97 analog slave, communicate over a 5-line digital interface known as an audio codec-link or AC-link. Generally, AC97 data is transferred bidirectionally with separate transmit and receive data lines at a 48 KHz frame rate. Bit clock and frame sync signals are shared between the transmit and receive data lines. Each frame consists of 256 bits of serial data divided into 13 slots. The first 16 bits of each frame make up slot 0. The remaining 240 bits of each frame make up twelve 20-bit slots of data referred to as slot 1 through slot 12. Each slot has a specific function per the AC97 specification. Slots 0, 1 and 2 are used for control over the AC97 interface. Slots 3-12 are used for data transfer to or from the AC97 slave.

Recently, there have been several technological developments in the field of audio data transfer that would be beneficial to implement in an AC97 system, but these developments are beyond the scope of the current AC97 specification. First, there is an increasing proliferation of audio data transfer over the Internet. This Internet audio is typically in the form of a compressed audio format such as MP3, MPEG AAC, WMA, AC3, DTS, and numerous other formats. Compressed formats are generally used so that the amount of data required for a song or sound bite can be reduced, thus conserving bandwidth and reducing the time taken to transfer the sound file over the Internet. In addition to these compressed data formats, there are also requirements for compressed voice data for which there are several encoded audio formats. One disadvantage of the AC97 design is that there is generally no mechanism for transferring these compressed audio formats over the AC97 interface.

A second technological development is that the precision of digital audio is increasing. High-precision 24-bit pulse code modulation ("PCM") audio samples are increasingly common, with algorithms such as DTS and MLP (the new compression standard for DVD-Audio) becoming popular. 32-bit floating point data such as that compliant with the ANSI/IEEE 754 standard is another example of a high-precision data format. The current AC97 interface, however, only permits 20-bit sample width data transfer. Thus another disadvantage of the AC97 design is that there is generally no mechanism for transferring these high precision audio formats over the AC97 interface.

An apparatus and method for communicating a multiword digital message with an isochronous-signal processor is described in greater detail in co-pending and commonly assigned European Patent Application No. 01000328.3 filed 30th July 2001 and that claims Convention priority from U.S. provisional patent application serial No. 60/221,698, filed July 31, 2000, entitled "APPARATUS AND METHOD FOR COMMUNICATING A MULTIWORD DIGITAL MESSAGE WITH AN ISOCHRONOUS-SIGNAL PROCESSOR".

### SUMMARY OF THE INVENTION

These and other problems are generally solved or circumvented, and technical advantages are generally achieved, by preferred embodiments of the present invention which transfer compressed or high-precision media data between a controller and an isochronous-signal processor. The media data may be, for example, audio, video or multimedia data. As used herein, "compressed data" is data that has been processed by a compressor or encoder to compress or encode the data such that the data transfer rate and storage requirements for the data are reduced compared to an uncompressed or unencoded version of the media data. As used herein, "high-precision" data is data with a word width greater than 20 bits per sample.

The normal media data stream flowing between the controller and the slave is isochronous, and generally should not be interrupted in order for the system to function properly. With media data processing, the data generally needs to arrive at the destination at close to the same rate of data flow as the source. A preferred embodiment of the present invention enables the transfer of compressed data simultaneously with the standard isochronous data (e.g., PCM data in an AC97 interface). Another preferred embodiment of the present invention enables the transfer of the standard isochronous data in a high-precision data format. The high-precision data may be, for example, fixed point or floating point data.

In accordance with a preferred embodiment of the present invention, a method for communicating compressed media data with an isochronous-signal processor comprises generating a block of the compressed media data; generating an isochronous data frame comprising multiple data slots. Each of the data slots has a slot bit length, and the data slots comprise a first unused data slot. The method further comprises parsing the block of compressed media data into data sections, wherein a section bit length of each of the data sections is less than or equal to the slot bit length, inserting one of the data sections into the first unused data slot, and serially transferring the data frame over an isochronous-signal interface connected to the isochronous-signal processor.

In accordance with another preferred embodiment of the present invention, a processor circuit for communicating isochronous media data and compressed media data comprises a digital interface providing a serial digital link to a digital controller, wherein the isochronous media data and the compressed media data are transferred in data frames over the digital link. The circuit further comprises a data frame processor coupled to the digital interface for processing the data frames. Each of the data frames comprises multiple data slots, and at least one of the data slots that is not used for transferring the isochronous data is used for transferring the compressed data. The circuit further comprises a data buffer coupled to the data frame processor for storing a block of the compressed data.

In accordance with a preferred embodiment of the present invention, a method for communicating high-precision isochronous media data with an isochronous-signal processor comprises generating a data frame comprising multiple data slots. Each of the data slots has a slot bit length, and the high-precision isochronous media data has a data bit length larger than the slot bit length. The method further comprises parsing the high-precision isochronous data into two or more of the data slots and serially transferring the data frame over an isochronous-signal interface connected to the isochronous-signal processor.

In accordance with another preferred embodiment of the present invention, a processor circuit for communicating high-precision isochronous media data comprises a digital interface providing a serial digital link to a digital controller, wherein the high-precision isochronous media data is transferred in data frames over the digital link. The circuit further comprises a data frame processor coupled to the digital interface for processing the data frames. Each of the data frames comprises multiple data slots, and each of the data slots has a slot bit length, wherein the high-precision isochronous media data has a data bit length larger than the slot bit length. The high-precision isochronous data is parsed into two or more of the data slots.

A preferred embodiment of the present invention may be implemented within the existing functionality of the AC97 specification to transfer compressed or high-precision data with minimal changes or additions to the AC97 design. Compressed data may be streamed across a single serial interface simultaneously with PCM data and control/status data. In addition, this shared interface may reduce pin count on devices, which in turn may reduce IC cost and board complexity.

A preferred embodiment of the present invention does not require that the compressed audio data be padded. Also, in some preferred embodiments, no additional information needs to be added to the compressed audio stream.

Furthermore, a preferred embodiment of the present invention may be backward compatible with the current AC97 specification. For a high-precision data transfer embodiment, as long as the most significant bits ("MSB"s) are still assigned to their appropriate AC97 slots, the AC97 component receiving the high-precision data receives essentially the same 20-bits as in a normal data transfer. The receiver may or may not use the least significant bits ("LSB"s) of the high-precision data. Of course, if the receiver does not use the LSBs, it should not attempt to use the slots containing the LSBs for other purposes.

Yet further, a preferred embodiment of the present invention allows multiple channels of high-precision data to be transferred across an AC97 interface through a bit packing method.

A preferred embodiment of the present invention is flexible, allowing designers to implementing the high-precision algorithms with minimal system cost. For example, designers may able to implement high-precision algorithms while minimizing gate count, processor utilization, and/or memory consumption. As another example, the flexibility of the bit packing method allows designers to implement high-precision algorithms that best fit their specific system design.

The foregoing has outlined rather broadly the features and technical advantages of the present invention in order that the detailed description of the invention that follows may be better understood. Additional features and aspects of the invention will be described hereinafter which form the subject of the claims of the invention. It should be appreciated by those skilled in the art that the conception and specific embodiment disclosed may be readily utilized as a basis for modifying or designing other structures or processes for carrying out the same purposes of the present invention. It should also be realized by those skilled in the art that such equivalent constructions do not depart from the spirit and scope of the invention as set forth in the appended claims.

### BRIEF DESCRIPTION OF THE DRAWING

For a more complete understanding of the present invention, and the advantages thereof, reference is now made to the following descriptions, by way of example only, and taken in conjunction with the accompanying drawing, in which:
FIGURE 1 is a block diagram of an AC97 system;
FIGURE 2 is a block diagram of a single controller, multiple slave configuration;
FIGURE 3 is a block diagram of an isochronous-signal processor;
FIGURE 4 is a high level timing diagram of the slot arrangement within a single AC97 frame;
FIGURE 5 is a detailed timing diagram of an AC97 frame;
FIGURE 6 is high level timing diagram of the slot arrangement for a preferred embodiment compressed data transfer;
FIGURE 7 is a table showing the slot request bit flags in an input slot; and
FIGURE 8 is high level timing diagram of the slot arrangement for a preferred embodiment high-precision data transfer.

### DETAILED DESCRIPTION OF A PREFERRED EMBODIMENT

The making and using of the presently preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

The present invention will be described with respect to preferred embodiments in a specific context, namely an AC97 system. The invention may also be applied, however, to other isochronous-signal processing systems transferring audio data with other protocols, or transferring other types of isochronous data, such as video or multimedia. In addition, while the description of the preferred embodiments refers to an implementation in a DSP, embodiments with functions embedded into codec hardware are also possible. An embedded codec implementation may require IC design and fabrication, and may implement compressed or high-precision data formats and protocols specific to the particular codec design and capabilities.

Many devices may utilize AC97 interfaces, including digital speakers, Internet audio, modems, and wireless technology. Preferred embodiments of the present invention may be applicable to any of these areas, particularly those that require the transfer of compressed or high-precision data across the AC97 interface. AC97 controllers may utilize this technology. Typical AC97 slaves that may utilize this technology include audio processors such as equalization processors, and DSPs that are programmed to interface with an AC97 controller. In addition, future AC97 codecs with greater functionality than existing codecs may also integrate embodiments of the present invention into their design.

In the AC97 specification, the AC97 slave is generally referred to as an AC97 codec. In this description, however, it is referred to as an AC97 slave because it may be implemented, for example, as a dedicated codec or as a DSP, designed with a preferred embodiment data transfer included in its functionality, or as a combination DSP and codec.

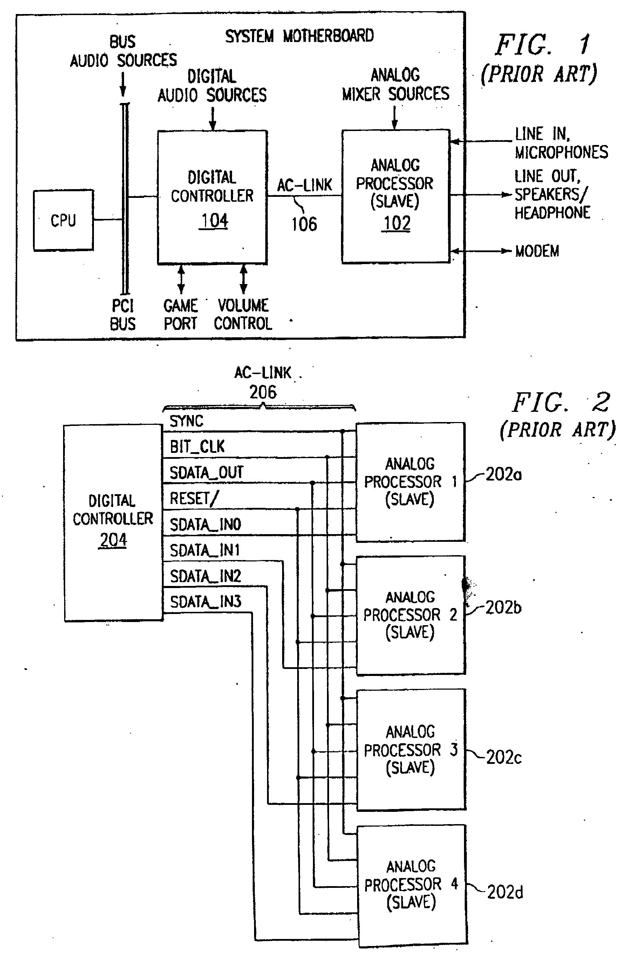

With reference now to Fig. 1, there are shown the primary components of an AC97 audio system. AC97 slave 102 may perform fixed 48 kHz or variable sample rate DAC and ADC conversions, mixing, and analog processing (tone, 3D stereo enhancement, etc.). AC97 slave 102 functions as a slave to AC97 digital controller 104, which is implemented in the digital portion of the AC97 audio system.

AC97 controller 104 is primarily intended for the PCI bus in a personal computer ("PC"), and may function as a stand-alone design that supports, for example, high quality sample rate conversions to/from 48 kHz, wavetable synthesis, and multi-channel encoded sound. AC97 controller 104 may also be embedded within a PCI multifunction accelerator, offering higher levels of integration by combining audio with telephony or graphics. The AC97 architecture may also be implemented in ISA, USB, 1394, or other designs.

AC-link 106 is a digital link connecting AC97 controller 104 to AC97 analog slave 102, and is a bidirectional, five-wire, serial time division multiplex ("TDM") format interface. AC-link 106 is primarily designed as a dedicated point-to-point interconnect on a circuit board, although an off-board interconnect may be implemented. Data is transferred bidirectionally over separate transmit and receive data lines. The bit clock and the frame sync signals are shared between the transmit and receive data lines.

As can be seen in Fig. 1, digital data is transferred between the digital controller 104 and the analog processor 102. Analog interfaces are processed by AC97 analog slave 102. The AC97 architecture can support stereo two-speaker PC audio, as well as multi-channel extensions and multi-channel audio.

As shown in Fig. 2, AC-link 206 is capable of supporting multi-point connections between one AC97 digital controller 204 and up to four AC97 analog slaves 202a-202d. Multiple slave AC-link implementations utilize a common BIT_CLK, and each slave device uses its own SDATA_IN line. In some systems, the SDATA_INx lines may be ORed together and input into a single pin on digital controller 204. The remaining lines, SYNC, SDATA_OUT, and RESET/, may be separate or shared between slaves.

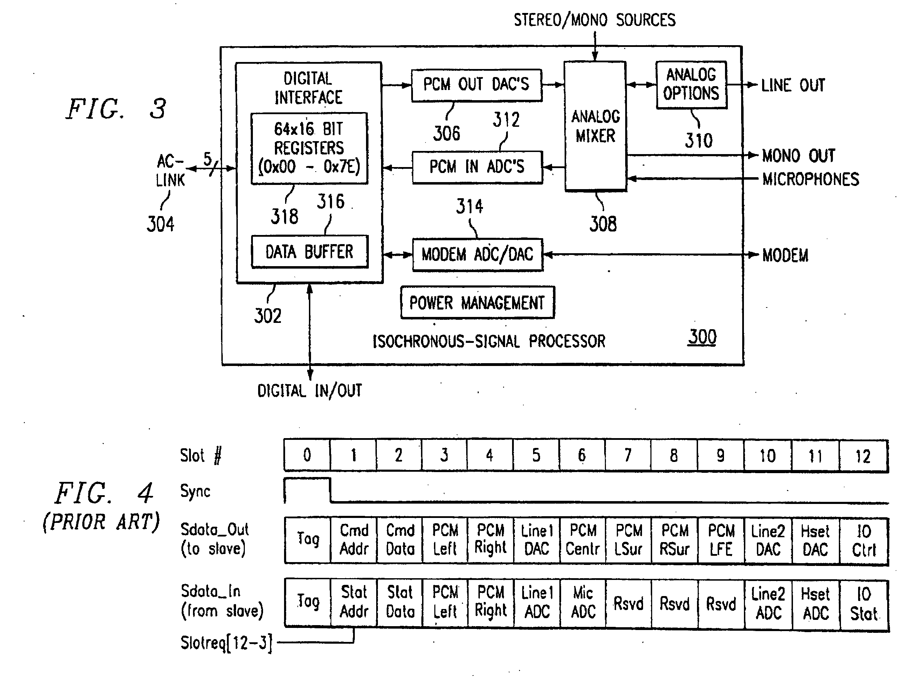

With reference to Fig. 3, there is shown the internal functional blocks of AC97 isochronous-signal processor. Slave digital interface 302 provides AC-link 304 and 64 16-bit registers 318 for communication with an AC97 digital controller. Digital interface 302 also comprises optional data buffer 316, which may be used to hold data transferred using the multi-word protocol described in detail in co-pending Provisional Application Serial No. 60/221,698. Alternatively, a data buffer may be used to hold compressed data or high-precision data for processing. Two fixed 48 kHz or variable rate DACs 306 support a stereo pulse code modulation ("PCM") Out channel which contains a mix generated in the AC97 controller of all software sources, including an internal synthesizer and any other digital sources. PCM Out 306 is mixed with additional analog sources and provided with gain control by Analog Mixer Block 308, processed with optional 3D stereo enhancement and tone controls by Analog Options Block 310, and provided as various line out signals. For speakerphone telephony, the mono out may deliver mic only or a mono mix of sources to the telephony subsystem.

PCM ADCs 312 support two channels of fixed 48 kHz or variable rate input, and may support a 3rd fixed 48 kHz ADC input channel dedicated to the mic. The standard stereo PCM in channel supports record of any mono or stereo source, or mix of sources, from Analog Mixer Block 308. The optional dedicated mic channel extends the range of acoustic echo cancellation capabilities by allowing the audio subsystem to record the MIC along with left and right line out reference signals needed for robust stereo mic input filtering, either in the AC97 digital controller or on the host CPU. The independent mic channel may also be dedicated to voice input applications. Modem ADC/DAC pair 314 supports integration of the line codec portion of a modem AFE function into AC97.

Some of the Analog Mixer Block 308 and Analog Options Block 310 functions may be implemented in a DSP while the data is still in digital format. Thus some of the functionality of Analog Mixer Block 308 and Analog Options Block 310 may be moved into the Digital Interface 302 while maintaining the overall system functionality. It is also possible to move all of the functions in the analog domain into the DSP and use only digital interfaces, without any analog components or processing. For example, isochronous-signal processor 300 may provide digital data signals directly to digital speakers.

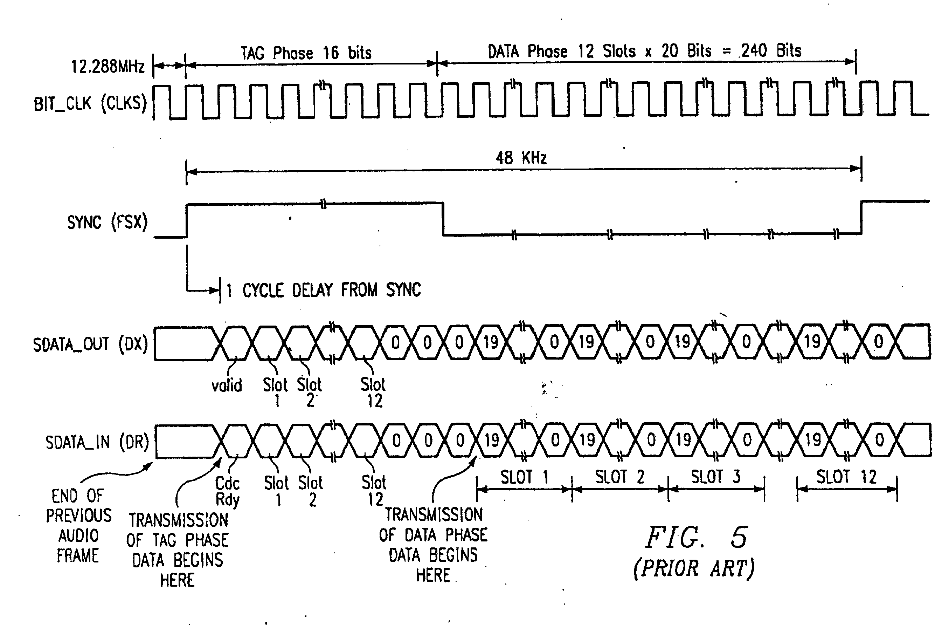

Referring now to Fig. 4, and in greater detail in Fig. 5, there is shown the format and timing of data transfer between an AC97 slave and an AC97 digital control over an AC-link interface. AC97 data is transferred in frames bidirectionally and serially over separate transmit and receive data lines at a 48KHz frame rate. The bit clock and frame sync signals are shared between transmit and receive. Each frame consists of 256 bits of serial data divided into 13 slots. The first 16 bits of each frame make up slot 0. The remaining 240 bits of each frame make up twelve 20-bit slots of data referred to as slot 1 through slot 12. Each slot has a specific function per the AC97 specification. Slots 0, 1 and 2 are used for control over the AC97 interface. Slots 3 through 12 are used for data transfer to or from the AC97 slave. A data frame processor in the digital controller or in the slave may compile data into outgoing frames and parse data from incoming frames.

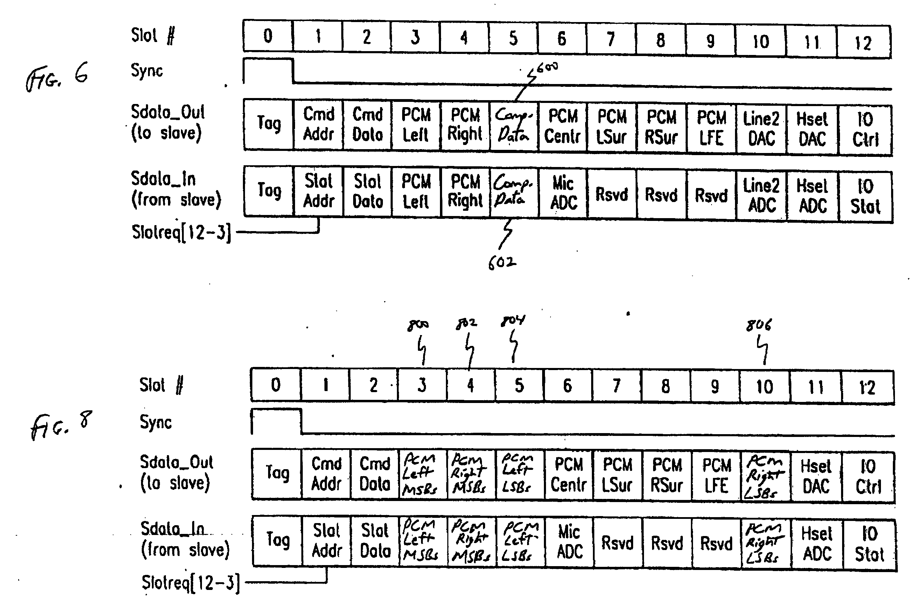

In most cases of AC97 implementation, not all of the data slots 3 through 12 of an AC97 frame are used during transmission of data. A preferred embodiment of the present invention exploits that characteristic to transfer compressed audio data across the AC97 interface. Any unused slot or slots may be used for the compressed audio data. The other data slots may continue to carry standard PCM data. In this way, the AC97 Slave may transmit/receive and process both compressed data and conventional PCM data simultaneously. An example is illustrated in Fig. 6 for serial data out and serial data in frames. Slot 5 is designated for modem line 1 data by the AC97 specification. Because modem line 1 data is not used in this example, compressed audio data 600 may be transferred in slot 5 of the serial data out frame, and compressed audio data 602 may be transferred in slot 5 of the serial data in frame. The other slots may simultaneously transfer PCM data.

The compressed audio data may carry information for up to 6 channels or greater, but because it is compressed it may occupy only one slot in the AC97 frame. Alternatively, if faster transfer or more data is required, then more than one slot in a frame may be used. Because compressed audio algorithms typically process compressed data in bytes, the interface may only transmit in the 16 most significant bits of the slot. Although 20 bits would not evenly distribute into bytes for standard processing, all 20 bits of a slot may still be used if desired. Alternatively, more than 20 bits may be used if they are spread across more than one slot. With 24 bit compressed data, for example, 16 bits may be placed in one slot and 8 bits in another slot, or 20 bits may be placed in one slot and 4 bits in another slot.

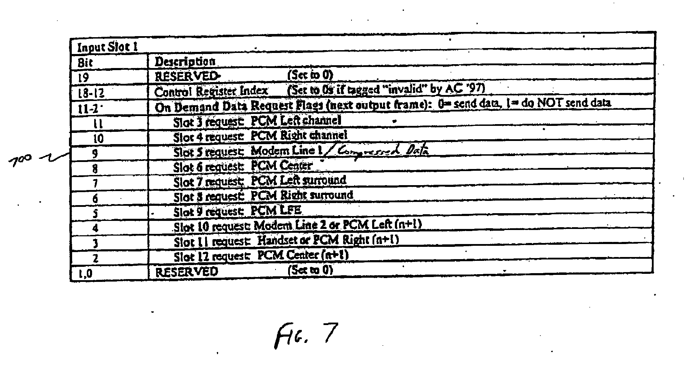

Several different preferred embodiment implementations may be used to transfer compressed data over the AC97 interface. A first preferred embodiment utilizes the on demand sampling features of the AC97 specification. In this embodiment, the AC97 slave makes requests for compressed audio data by asserting the slot request bit flag associated with the specific compressed audio data slot, in the same manner as it would make a request to receive PCM data in an on demand sampling fashion. The flags are passed from the slave to the controller every audio input frame in input slot 1. Fig. 7 is a table illustrating the bit assignments for input slot 1. The 9^{th} bit 700 of input slot 1 is set by the AC97 slave to request compressed data in slot 5. The AC97 controller (master) then receives the slot request in the AC97 input frame. In the next AC97 frame, if compressed audio data is present in the AC97 controller's buffer, the controller will insert compressed data into slot 5 and set the appropriate tag bit to valid. The AC97 slave will then receive the AC97 frame data, check the tag bit associated with compressed audio data slot 5, and if set, receive the data contained in slot 5.

In a preferred embodiment, the AC97 slave is generally not expected to receive data each time it is requested, but will continue to request data such that as the data becomes available to the AC97 controller, the controller will immediately transmit the data to the slave. In this way, the compressed audio data will be transferred as fast as possible over the AC97 interface to generate the audio stream. Note that compressed audio is typically processed in blocks or frames of audio data. In many cases, before the decoder or uncompressor can operate on the data, a complete block or frame of audio data must be received. This is different from PCM data processing, because PCM data may be immediately processed as a single sample, and so the conventional AC97 interface is used only to request a PCM sample as needed by the AC97 slave.

For compressed audio data transmission from the AC97 slave to the AC97 controller over the SDATA-IN line, the AC97 slave places data in the selected slot and sets the appropriate tag bit to valid. Generally, the AC97 slave may transmit any compressed data in any give AC97 frame as long as the appropriate tag bit is set to valid for frames with valid data.

In a second preferred embodiment, the AC97 interface may operate on compressed audio data that contains sync words. This generally eliminates the need to use the on demand sampling feature of the AC97 interface. The slot request bit flag for the compressed audio data slot is set high by the AC97 slave, but the AC97 slave does not examine the tag bit for the compressed audio slot. In this embodiment, the AC97 slave treats all data in the compressed audio data slot as potentially valid regardless of the setting of the tag bit. Because the compressed audio data format has a sync word associated with each compressed audio block, the AC97 slave may examine the incoming data on a word by word basis until the sync word is detected. Invalid data received prior to the sync word may be discarded. After the sync word is found, the compressed data may be received and stored in a buffer for processing by the AC97 slave. In some cases, the compressed audio block may also be examined for the size of the block, although most have standard sizes. Data received after the end of the compressed audio block, but before the next sync word, may be discarded.

In a preferred embodiment, once the AC97 controller begins sending a compressed audio block, it must always fill the compressed audio data slot with valid data until the compressed audio data block is complete. The AC97 controller may send zeros or 'don't care' data until it repeats the process.

For compressed audio data transmission from the AC97 slave to the AC97 controller over the SDATA-IN line, the AC97 slave may place data in the selected slot. Valid tag bits are always set. Generally, the AC97 slave must buffer enough of the compressed audio data block such that the selected slot continues to transmit valid data until the entire compressed audio data block is complete. After that zeros or 'don't care' data may be transmitted. The AC97 controller receives and processes the data in a manner similar to the AC97 slave receiving data. The AC97 controller searches for the sync word and then processes an audio data block once a sync word is detected.

In a third preferred embodiment, the AC97 interface may operate on compressed audio data that does not contain sync words. This embodiment is similar to the second except it applies to those compressed audio formats that may not contain a sync word. In this case, a header containing a sync word is generated somewhere in the data stream. This may be performed by the AC97 controller or elsewhere in the audio stream prior to the AC97 controller. An arbitrary compressed audio block size may also be created such that a fixed amount of data is associated with the header sync word.

As in the second embodiment, the slot request bit flag for the compressed audio data slot is set high, and the AC97 slave does not examine the tag bit for the compressed audio slot. Instead the AC97 slave treats all data in the compressed audio data slot as potentially valid regardless of the setting of the tag bit.

The AC97 slave examines the incoming data on a word by word basis until the header containing the sync word is found. Invalid data received prior to the sync word may be discarded. After the sync word is detected, compressed data received up to the size of the audio block size may be stored in a buffer for processing by the AC97 slave. Data received after that but before the next header containing a sync word may be discarded.

In a preferred embodiment, once the AC97 controller begins sending a compressed audio block, it must always fill the compressed audio data slot with valid data until the compressed audio data block is complete. The AC97 controller may send zeros or 'don't care' data until it repeats the process.

For compressed audio data transmission from the AC97 slave to the AC97 controller over the SDATA-IN line, the AC97 slave may generate the header containing the sync word, and generate an arbitrary compressed audio block size. The AC97 slave then places data in the selected slot. Valid tag bits are always set. Generally, the AC97 slave must buffer enough of the compressed audio data block such that the selected slot continues to transmit valid data until the entire compressed audio data block is complete. After that zeros or 'don't care' data may be transmitted. The AC97 controller receives and processes the data in a manner similar to the AC97 slave receiving data. The AC97 controller searches for the header containing the sync word and then processes an audio data block once a sync word is detected.

As an alternative, a number of other protocols may be defined using a combination of the embodiments described above. For instance, protocols that do not require every AC97 frame to contain valid compressed data may be implemented by using the on demand sampling feature described in the AC97 specification. Also, the size of the block or amount of data may be sent in, with or after the sync or header.

As another alternative, protocols may be implemented in which multiple AC97 slots are used for the transmission of compressed audio data. In one embodiment, two data slots are used. The first slot may carry an indicator that compressed data is valid in the second slot. The AC97 slave may examine the first slot for the valid data indicator, and if set to valid, processes the data contained in the second slot. The AC97 slave may discard the second slot if the valid data indicator is set to invalid. The valid indicator may optionally be a value that counts up and wraps around, providing improved immunity to spurious noise in the valid indicator slots.

Another preferred embodiment also exploits the AC97 interface characteristic that all of the data slots 3 through 12 of an AC97 frame are generally not used. In this embodiment, high-precision data may be transferred across the AC97 interface. In general, high-precision data samples are separated and redistributed into the unused slots within an AC97 frame. For example, the most significant bits from each sample may be allocated to their normal AC97 frame slot, and the remaining least significant bits from each sample are distributed among the unused AC97 slots. After transfer of the data across the AC97 interface is complete, the high-precision data may be reconstructed by appending the least significant bits to the most significant bits of the corresponding sample.

As an example, a stereo audio stream of 20-bit PCM data transmitted to an AC97 slave typically occupies slots 3 and 4 of an AC97 frame. If the precision of that stereo audio stream is increased to 24 bits, the most significant 20 bits of the left and right channels are allocated to the required stereo slots 3 and 4. As shown in Fig. 8, slot 3 800 contains the 20 MSBs of the PCM left channel, and slot 4 802 contains the 20 MSBs of the PCM right channel. The four least significant bits of the left channel and the four least significant bits of the right channel are each allocated to any two of the other unused slots 5 through 12 in the AC97 frame. In Fig. 8, slot 5 804 is used to transfer the 4 LSBs of the PCM left channel, and slot 10 806 is used to transfer the 20 LSBs of the PCM right channel. The 24-bit stereo data may be reconstructed on the other end of the AC97 interface by appending the appropriate least significant bits transferred in slots 5 and 10 to the most significant bits transferred in slots 3 and 4, respectively.

One advantage of allocating the most significant bits to their required AC97 channel slots is that the high-precision convention does not have to be implemented on each side of the AC97 interface. If the receiving end of the AC97 interface does not employ the high-precision enhancement, the most significant bits of data may still be processed, with the least significant bits simply ignored.

Other methods of redistributing the high-precision data among the AC97 slots may be employed, but they will generally require implementation of the high-precision algorithm on both sides of the AC97 interface and would not be backward compatible in that respect. For example, with some less programmable AC97 controllers, the data may be most efficiently ordered with respect to byte ordering of the audio samples. For some applications, it may be preferable to distribute the bytes in the order in which they are received by the AC97 controller for transmission across the interface. The controller may assign the first two bytes of the first 24-bit channel in the first available AC97 slot, the remaining third byte of the first channel's sample in the second AC97 slot with the first byte of the second channel's sample, and so on. While this is not backward compatible, it provides another method for easily transmitting high-precision data across the AC97 interface, as long as the receiving end is configured to handle the redistributed high-precision data.

For high-precision data transmission from the AC97 slave to the controller, the same procedures may be used. For example, 24-bit stereo input PCM samples may also be redistributed between slots 3 and 4 and two other unused slots in the AC97 frame for transmission on SDATA_IN.

In some cases, it may not be desired to allocate separate slots for each channel's least significant bits, or it may not even be feasible to do so if there is a shortage of unused AC97 slots. In such cases, least significant bits for multiple channels may be packed together into unused slots. The least significant bits would then be unpacked on the other side of the AC97 interface and appended to the corresponding most significant bits.

As an example, a 24-bit six-channel output audio stream would require six unused slots to transfer the least significant four bits of each channel across the AC97 interface. There are only four remaining unused slots available within the AC97 frame, however, because the most significant bits of each channel already occupy six of the 10 data slots. By employing a bit packing technique, the number of unused slots required can be reduced from six slots to, for example, two slots, making the high-precision transfer feasible. The bit packing may pack the four least significant bits from five of the six channels into one unused AC97 slot, and the remaining four least significant bits of the sixth channel may be allocated to a second unused AC97 slot. On the other end of the AC97 interface the least significant bits in the two slots may be unpacked and then appended to the most significant bits of the corresponding channels. There are many bit distribution and packing methods that may be employed, depending on the number of unused slots that are available, the number of slots desired to be used, or that make the bit packing implementation simpler. For example, in the case of the multi-channel AC97 data transfer, two unused slots could each carry the packed least significant bits of three channels of the six if that was a more desirable or simpler implementation for packing and unpacking.

Although the present invention and its various aspects have been described in detail, it should be understood that various changes, substitutions and alterations can be made herein without departing from the spirit and scope of the invention as defined by the appended claims. For example, many of the features and functions discussed above can be implemented in software, hardware, or firmware, or a combination thereof. As another example, it will be readily understood by those skilled in the art that the specific protocol (e.g., bit, field & slot definitions) may be varied while remaining within the scope of the present invention. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for communicating compressed media data with an isochronous-signal processor, which method comprising:
generating a block of said compressed media data;
generating an isochronous data frame comprising multiple data slots, each of said data slots having a slot bit length, and wherein said data slots comprise a first unused data slot;
parsing said block of compressed media data into data sections, wherein a section bit length of each of said data sections is less than or equal to said slot bit length;
inserting one of said data sections into said first unused data slot; and
serially transferring said data frame over an isochronous-signal interface connected to said isochronous-signal processor.

2. The method of claim 1 further comprising:
repeating said inserting of data sections into data frames and transferring of said data frames until all of said block of said compressed media data is transferred.

3. The method of claim 1 or claim 2, wherein said media data is selected from a group consisting of: audio data, video data, multimedia data, and combinations thereof.

4. The method of any of claims 1 to 3, wherein said serial transfer comprises receiving said data frame with said isochronous-signal processor over said isochronous-signal interface.

5. The method of any of claims 1 to 3, wherein said serial transfer comprises transmitting said data frame with said isochronous-signal processor over said isochronous-signal interface.

6. The method of any preceding claim further comprising:
transferring isochronous data in a different slot of said data frame simultaneously with said compressed data.

7. The method of any preceding claim further comprising:
initiating said transferr of said data frame with a data initiation mechanism selected from a group consisting of: setting a tag bit flag, transferring compressed data containing a sync word, and transferring a header containing a sync word.

8. A processor circuit for communicating isochronous media data and compressed media data, which processor circuit comprising:
a digital interface for providing a serial digital link to a digital controller, said isochronous media data and said compressed media data arranged to be transferred in data frames over said digital link;
a data frame processor coupled to said digital interface for processing said data frames, each of said data frames comprising multiple data slots, and wherein at least one of said data slots that is not used for transferring said isochronous data is used for transferring said compressed data; and
a data buffer coupled to said data frame processor for storing a block of said compressed data.

9. The processor circuit of claim 8, wherein said processor circuit is selected from a group consisting of: an isochronous-signal processor and a digital controller.

10. The processor circuit of claim 8 or claim 9, wherein said processor circuit is implemented on one or more devices selected from the group consisting of: an audio codec integrated circuit, a digital signal processor (DSP) integrated circuit, and a combination thereof.

11. The processor circuit of any of claims 8 to 10, wherein said media data comprises audio data, and said serial digital link comprises an audio codec-link.

12. The processor circuit of any of claims 8 to 11, wherein said compressed data contains multiple channel data.

13. A system for communicating isochronous media data and compressed media data, which system comprising:
a digital controller comprising a first digital interface;
an isochronous-signal processor comprising a second digital interface; and
a serial digital link coupled between said first and second digital interfaces, said isochronous media data and said compressed media data arranged to be transferred in data frames over said digital link, each of said data frames comprising multiple data slots, and wherein at least one of said data slots that is not used for transferring said isochronous data is used for transferring said compressed data.

14. The system of claim 13, wherein said digital controller comprises an audio codec controller, said isochronous-signal processor comprises an audio codec slave, said serial digital link comprises an audio codec-link, and said media data comprises audio data.

15. The system of claim 13 or claim 14, wherein said digital controller and said isochronous-signal processor are implemented on separate integrated circuits.

16. A method for communicating high-precision isochronous media data with an isochronous-signal processor, which method comprising:
generating a data frame comprising multiple data slots, each of said data slots having a slot bit length, and wherein said high-precision isochronous media data has a data bit length larger than said slot bit length;
parsing said high-precision isochronous data into two or more of said data slots; and
serially transferring said data frame over an isochronous-signal interface connected to said isochronous-signal processor.

17. The method of claim 16, wherein said media data is selected from a group consisting of: audio data, video data, multimedia data, and combinations thereof.

18. The method of claim 16 or claim 17, wherein said serial transfer comprises receiving data frame with said isochronous-signal processor over said isochronous-signal interface.

19. The method of claim 16 or claim 17, wherein said serial transfer comprises transmitting said data frame with said isochronous-signal processor over said isochronous-signal interface.

20. The method of any of claims 16 to 19, wherein said isochronous-signal interface comprises an audio codec-link, and wherein said parsing further comprises inserting the 20 most significant bits (MSBs) of said high-precision isochronous data into a standard pulse code modulation (PCM) data slot, and inserting the remaining least significant bits (LSBs) of said high-precision data into an unused data slot.

21. The method of any of claims 16 to 20 further comprising:
performing said parsing of said high-precision data along byte boundaries.

22. The method of any of claims 16 to 21 further comprising:
transferring multiple channels of said high-precision data in said data frame; and
bit-packing LSBs of said multiple channels into one or more of said data slots.

23. A processor circuit for communicating high-precision isochronous media data, which processor circuit comprising:
a digital interface for providing a serial digital link to a digital controller, said high-precision isochronous media data arranged to be transferred in data frames over said digital link; and
a data frame processor coupled to said digital interface for processing said data frames, each of said data frames comprising multiple data slots, each of said data slots having a slot bit length, wherein said high-precision isochronous media data has a data bit length larger than said slot bit length, and wherein said high-precision isochronous data is parsed into two or more of said data slots.

24. The processor circuit of claim 23, wherein said processor circuit is selected from a group consisting of: an isochronous-signal processor and a digital controller.

25. The processor circuit of claim 23 or claim 24, wherein said processor is implemented on one or more devices selected from a group consisting of: an audio codec integrated circuit, a digital signal processor (DSP) integrated circuit, and a combination thereof.

26. The processor circuit of any of claims 23 to 25, wherein said media data comprises audio data, and said serial digital link comprises an audio codec-link.

27. The processor circuit of any of claims 23 to 26, wherein said high-precision isochronous data is selected from a group consisting of: fixed point data, and floating point data.

28. A system for communicating high-precision isochronous media data, which system comprising:
a digital controller comprising a first digital interface;
an isochronous-signal processor comprising a second digital interface; and
a serial digital link coupled between said first and second digital interfaces, said high-precision isochronous media data arranged to be transferred in data frames over said digital link, each of said data frames comprising multiple data slots, each of said data slots having a slot bit length, wherein said high-precision isochronous media data has a data bit length larger than said slot bit length, and wherein said high-precision isochronous data is parsed into two or more of said data slots.

29. The system of claim 28, wherein said digital controller comprises an audio codec controller, said isochronous-signal processor comprises an audio codec slave, said serial digital link comprises an audio codec-link, and said isochronous media data comprises audio data.

30. The system of claim 28 or claim 29, wherein said digital controller and said isochronous-signal processor are implemented on separate integrated circuits.
